# EUROPÄISCHE PATENTSCHRIFT

(11) **EP 0 855 542 B1**
(45) Veröffentlichungstag und Bekanntmachung des Hinweises auf die Patenterteilung: **25.02.2004**
(21) Anmeldenummer: 97122592.5
(22) Anmeldetag: 20.12.1997
(51) Int. Cl.: F16K 27/04

(54) **Verfahren zum Herstellen eines Hohlkörpers und Hohlkörper**
Method to manufacture a hollow body and a hollow body
Procédé pour la fabrication de corps creux et un corps creux

(30) Priorität: 22.01.1997 DE 19702087
(43) Veröffentlichungstag der Anmeldung: 29.07.1998
(73) Patentinhaber: Hansgrohe AG, 77761 Schiltach (DE)
(72) Erfinder: Katzer, Dieter, 49401 Damme (DE)
(74) Vertreter: Patentanwälte Ruff, Wilhelm, Beier, Dauster & Partner

(56) Entgegenhaltungen:
- EP-A- 0 647 808
- EP-A- 0 694 352
- EP-A- 0 716 257
- US-A- 3 949 186
- US-A- 4 376 885
- US-A- 4 603 089
- US-A- 4 610 393
- PATENT ABSTRACTS OF JAPAN vol. 018, no. 418 (M-1650), 5. August 1994 & JP 06 126478 A (OLYMPUS OPTICAL CO LTD), 10. Mai 1994
- PATENT ABSTRACTS OF JAPAN vol. 018, no. 538 (M-1686), 13. Oktober 1994 & JP 06 190573 A (KOBE STEEL LTD), 12. Juli 1994

## Beschreibung

Die Erfindung betrifft ein Verfahren zum Herstellen eines mindestens eine Wasserführung aufweisenden Armaturenkörpers einer Sanitärarmatur sowie einen mindestens eine Wasserführung aufweisenden Armaturenkörper einer Sanitärarmatur.

Sanitärarmaturen haben üblicherweise einen Armaturengrundkörper, der aus Messing hergestellt ist und in seinem Inneren Aufnahmen für Ventilteile, Wasserführungen oder dergleichen aufweist. Die Wasserführungen müssen spanabhebend gearbeitet werden, insbesondere durch Bohren. Dadurch haben solche Armaturengrundkörper einen relativ hohen Preis.

Zur Vereinfachung eines Armaturenkörpers und seiner Verbilligung ist es bereits bekannt, als Ausgangskörper ein Rohr zu nehmen und in das Rohr Einzelteile einzusetzen.

Es ist bekannt, zwei ineinander gesteckte Rohre durch eine Schweißung miteinander zu verbinden, die an der Außenseite einen Schweißwulst stehen lässt (JP 06126478).

Diese Verbindungstechnik zweier ineinander gesteckter Rohre, die keinen Zwischenraum zwischen sich freilassen, ist auch auf dem Gebiet der Herstellung von Wellenleitem bekannt (US-A 3949186).

Auf dem Gebiet der Abgasanlagen von Kraftfahrzeugen mit Verbrennungsmotoren ist es bekannt, ein Rohr dadurch zu unterteilen, dass ein in Längsrichtung verlaufendes flaches Blech in das Rohr eingesetzt und von außen verschweißt wird (EP 716257).

Weiterhin ist eine Sanitärarmatur bekannt, bei der in einem äußeren Rohr eine Armatur eingesetzt ist. Die Armatur wird durch eine von außen her eingesteckte Schraube festgelegt. Sie muss entnehmbar sein, so dass keine dauernde Festlegung erfolgen kann. (US-A 4610393).

Der Erfindung liegt die Aufgabe zugrunde, ein Verfahren zum kostengünstigen Herstellen eines mehrteiligen Armaturenkörpers sowie einen solchen Armaturenkörper zu schaffen.

Zur Lösung dieser Aufgabe schlägt die Erfindung ein Verfahren mit den im Anspruch 1 genannten Merkmalen sowie einen Armaturenkörper mit den im Anspruch 12 genannten Merkmalen vor. Weiterbildungen der Erfindung sind Gegenstand von Unteransprüchen.

Der Außenmantel kann dabei schon aus einem Material hergestellt werden, das an sich dünn ist und das nach einem für das Material geeigneten Verfahren zu dem Außenmantel geformt wird. Ein solches dünnes Material soll im folgenden als Blech bezeichnet werden. Er kann sich dabei zwar auch um Metallblech handeln, es muß jedoch nicht unbedingt aus Metall sein. So ist es beispielsweise auch möglich, einen Außenmantel als Hohlkörper aus einem Kunststoff herzustellen, der beispielsweise geblasen oder tiefgezogen wird.

Das Einsatzteil, das in dem Hohlkörper angebracht und von der Außenseite her durch das Blech des Außenmantels zerstörungsfrei angebracht wird, braucht dabei nicht unbedingt aus Blech zu bestehen. Es kann sich dabei beispielsweise um ein massives Teil handeln, beispielsweise eine Gewindebuchse oder dergleichen, die von der Außenseite dann auch angebracht werden kann.

Das Verfahren wird erfindungsgemäß dazu verwendet, im Innern des Hohlkörpers eine Wasserführung anzubringen, wozu das Einsatzteil verwendet wird. Hierbei kann es sich dann wiederum um ein Einsatzteil aus Blech handeln.

Die Dicke des Blechs bei dem Außenmantel hängt von dem verwendeten Verfahren ab.

Das Verfahren wird erfindungsgemäß dazu verwendet, eine Sanitärarmatur oder besser gesagt das Gehäuse für eine Sanitärarmatur herzustellen.

Nach der Erfindung wird also nicht nur als Ausgangskörper ein kostengünstiges Blechteil verwendet, sondern auch die im Innern des Blechteils anzubringenden Wasserführungen durch einzelne Blecheinsatzteile hergestellt. Diese lassen sich in einfacher Weise herstellen, in das Rohr einsetzen und dort nach einer vorübergehenden Fixierung mit dem Außenmantel verbinden.

Erfindungsgemäß ist vorgesehen, daß mindestens eine Wasserführung zwischen einem Einsatzteil und dem Außenmantel gebildet wird. Auf diese Weise wird es möglich, mit ebenen Blechen als Ausgangsmaterial zu arbeiten, also keine im Querschnitt geschlossenen Rohre für die Einsatzteile zu verwenden.

Ebenfalls möglich ist es, daß mindestens eine Wasserführung zwischen zwei Einsatzteilen gebildet werden kann. Hierdurch lassen sich sogar Rohre durch einfache Bleche simulieren.

Es ist aber auch möglich, daß mindestens eine Wasserführung durch ein im Querschnitt geschlossenes Einsatzteil gebildet werden kann.

In nochmaliger Weiterbildung der Erfindung kann vorgesehen sein, daß ein Einsatzteil rinnenartig geformt wird. Diese Rinne kann durch Ergänzung mit einem flächigen Teil, an dem sie befestigt wird, zu einem Kanal ergänzt werden.

Insbesondere kann vorgesehen sein, daß ein Einsatzteil mit einer Sicke versehenen wird. Beispielsweise kann in einem Rohr ein zweites Rohr eingeschoben werden, dessen Außendurchmesser dem Innendurchmesser des äußeren Rohres gleich ist. Wenn nun das innere Rohr eine nach innen gerichtete Sicke aufweist, so entsteht dadurch zwischen der Sicke und dem äußeren Rohr ein Kanal.

Zur Herstellung der Einsatzteile, insbesondere mit den Sicken oder Rinnen, kann erfindungsgemäß ein Tiefziehen verwendet werden. Durch Tiefziehen lassen sich Blechteile mit einem großen Bereich unterschiedlicher Formen herstellen. Die Blechteile können in zwei Dimensionen gekrümmt werden.

Zur Herstellung einer Verbindung zwischen zwei Wasserführungen kann erfindungsgemäß vorgesehen sein, die beiden Wasserführungen durch Anbringen eines Loches zu verbinden.

Wenn in einem Hohlkörper mehr als ein Einsatzteil vorhanden ist, kann erfindungsgemäß vorgesehen sein, die mehreren Einzelteile vor oder nach dem Einbringen in den Außenmantel miteinander zu verschweißen.

Insbesondere kann auch vorgesehen sein, daß eine Verbindung mehrerer Lagen von Blech miteinander erfolgt.

Als besonders günstige Verbindungsart hat sich eine Verschweißung mit Hilfe eines Lasers herausgestellt. Eine solche Verschweißung kann von der Außenseite des Außenmantels her durch diesen erfolgen. Es ist daher möglich, auch an solchen Stellen eine Verbindung herzustellen, auf die man sonst nicht zugreifen könnte.

Eine weitere von der Erfindung vorgeschlagene Verbindungsart ist ein Elektronenstrahlschweißen oder auch ein Ultraschallschweißen, das insbesondere bei Blechen aus Kunststoff angewendet werden kann.

Bei dem von der Erfindung vorgeschlagenen Hohlkörper handelt es sich um einen mindestens eine Wasserführung aufweisenden Armaturenkörper einer Sanitärarmatur, also beispielsweise eines Mischventils. Durch die Herstellung des Außenmantels als Blechteil stehen dem Entwickler viele unterschiedliche Formen zur Verfügung.

Bei dem erfindungsgemäßen Armaturenkörper ist vorgesehen, daß die Wasserführung mindestens teilweise zwischen einem Einsatzteil und dem Außenmantel gebildet ist.

Es ist desweiteren möglich, daß eine Wasserführung mindestens teilweise durch ein im Querschnitt geschlossenes Einsatzteil gebildet ist. Beispielsweise läßt sich in den Außenmantel auch ein vorgefertigtes Blechrohr einsetzen.

In nochmaliger Weiterbildung kann vorgesehen werden, daß eine Wasserführung mindestens teilweise zwischen zwei Einsatzteilen gebildet wird.

Insbesondere kann vorgesehen sein, daß die Verbindung zwischen den Einsatzteilen und dem Außenmantel sowie ggf. zwischen den Einsatzteilen untereinander eine Verschweißung ist, insbesondere eine Laserschweißung.

Erfindungsgemäß kann vorgesehen sein, daß die Verschweißung von der Außenseite des Außenmantels her durch diesen hindurch erfolgt. Dies ist bei Laserschweißen möglich.

Zur erleichterten Montage und Durchführung der Schweißung kann erfindungsgemäß vorgesehen sein, daß ein Einsatzteil eine solche Form erhält, daß es durch diese Form allein im Innern des Außenmantels fixiert werden kann.

Erfindungsgemäß kann vorgesehen sein, daß ein Einsatzteil tiefgezogen ist. Eine andere Möglichkeit wäre die Verformung durch einen Innenhochdruck.

Erfindungsgemäß kann ein Einsatzteil eine Sicke aufweisen, die einen Teil einer Wasserführung bildet. Zur Herstellung einer Verbindung zwischen mehreren Wasserführungen kann erfindungsgemäß eine Bohrung vorgesehen sein.

Es können zur Herstellung komplizierter Teile mehrere Einsatzteile insbesondere mehrlagig miteinander und/oder mit dem Außenmantel verbunden sein.

Erfindungsgemäß kann auch vorgesehen sein, daß ein Einsatzteil ausschließlich der Verstärkung dient, also keinen Teil einer Wasserführung bildet.

Zur weiteren Verbilligung der Herstellung kann vorgesehen sein, daß der Außenmantel mehrere identische Einsatzteile aufweist, die beispielsweise symmetrisch zueinander angeordnet werden können.

Insbesondere kann vorgesehen sein, daß ein Einsatzteil im Bereich der Verbindung mit dem Außenmantel/oder einem zweiten Einsatzzeit an diesem flächig anliegt. Dies kann durch Herstellung eines Randflanschs geschehen.

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine teilweise im Längsschnitt dargestellte Seitenansicht eines Thermostatventils;
- Fig. 2: in vergrößertem Maßstab einen Querschnitt durch das Ventil der Fig. 1;
- Fig. 3: perspektivisch eine Ansicht eines Einsatzteils für das Thermostatventil der Fig. 1;
- Fig. 4: einen Querschnitt durch zwei mit je einer Sicke versehene Einsatzteile;
- Fig. 5: die Verbindung mehrer Einsatzteile;

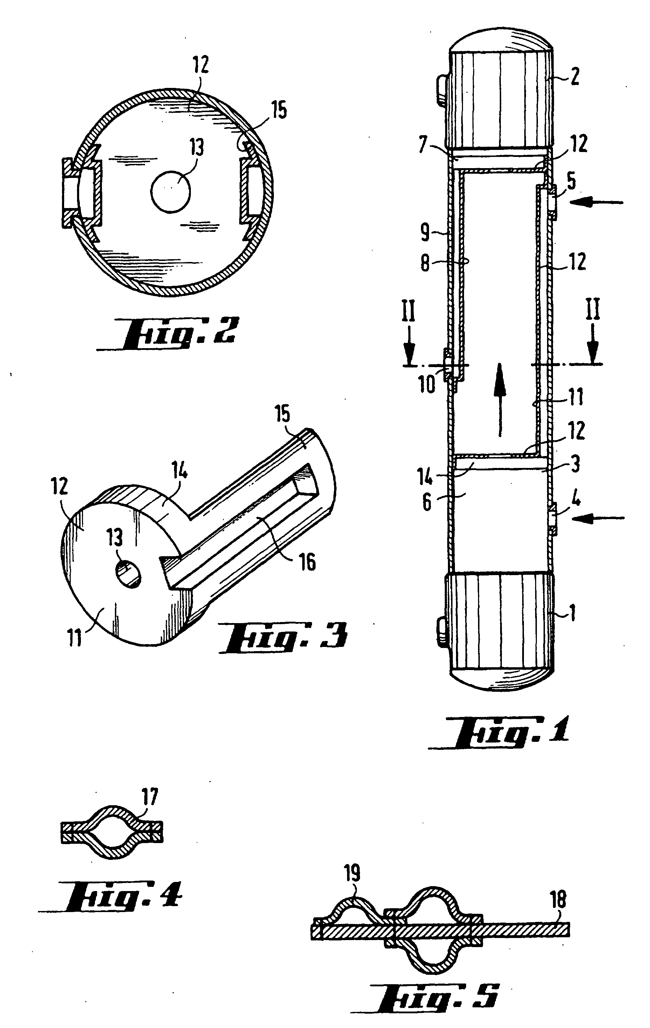

Fig. 1 zeigt eine Ansicht eines Thermostatventils. Das Thermostatventil weist die Form eines Rohres auf. An einem Ende ist ein Griff 1 für die Einstellung der Temperatur angeordnet. An dem gegenüberliegenden Ende des Thermostatventils ist ein Griff 2 zum Öffnen und Schließen des Auslauf aus dem Ventil angeordnet.

Der Armaturenkörper weist ein kreiszylindrisches Außenrohr 3 auf. In das Außenrohr 3 führt eine Öffnung 4 für kaltes Wasser und eine Öffnung 5 für warmes Wasser. An dem dem Griff 1 für die Temperatureinstellung zugeordneten Ende ist in dem Außenrohr 3 ein Raum 6 für ein Thermostatventil gebildet. An dem gegenüberliegenden Ende des Außenrohrs 3 ist ein Raum 7 für ein Absperrventil gebildet.

In dem Außenrohr 3 sind zwei Einsatzteile 8, 11 aus Blech eingesetzt. Das in Fig. 1 obere Einsatzteil 8 trennt von dem Außenrohr 3 eine Wasserführung 9 für das das Absperrventil verlassende Mischwasser. Die Wasserführung 9 für das Mischwasser führt zu einer Auslaßöffnung 10, die in nicht dargestellter Weise mit dem Ventilauslaß verbunden ist. Ein in seiner Form ähnliches Einsatzteil 11 trennt von dem Außenrohr 3 eine Wasserführung 12 für das Warmwasser.

Beide Einsatzteile 8, 11 enthalten eine ebene etwa kreisförmige Scheibe 12 mit einer zentralen Öffnung 13. Die Scheibe 12 ist längs ihres Randes schürzenartig umgebogen zur Bildung eines flachen Flansches 14, mit dem sie an der Innenseite des Außenrohrs 3 anliegt. Längs dieses Flansches 14 ist das Einsatzteil 8, 11 mit der Innenseite des Außenrohrs 3 verschweißt. Die Verschweißung erfolgt mit einem Laser, der von der Außenseite des Außenrohrs 3 durch dieses hindurch die Schweißverbindung ermöglicht.

Die Form der Einsatzteile 8, 11 ergibt sich am besten aus der Figur 3, die ein solches Einsatzteil 11 in perspektivischer Ansicht darstellt. Dieses Einsatzteil 11 ist durch Tiefziehen aus einem Stück Blech hergestellt. Von dem Scheibenelement 12, das von dem Flansch 14 umgeben ist, erstreckt sich ein Abschnitt 15 in Längsrichtung des Rohres. Dieser Abschnitt 15 enthält eine Rinne 16, die an ihrem der Scheibe 12 zugeordneten Ende offen ist und einen etwa rechteckigen Querschnitt aufweist. Die Rinne 16 ist mit Ausnahme ihres offenen Endes allseits von dem Abschnitt 15 umgeben, der in einer Mantelfläche eines Kreiszylinders liegt. Das Einsatzteil 11 wird in das Außenrohr 3 eingeschoben, wobei der Flansch 14 an der Innenseite des Außenrohrs 3 anliegt. Der Abschnitt 15 liegt ebenfalls an der Innenseite des Außenrohrs 3, siehe insbesondere den Querschnitt der Figur 2. Längs der die Rinne 16 begrenzenden Teile des Abschnitts 15 erfolgt auch hier eine Verschweißung mit Hilfe eines Lasers von außen.

Auf diese Weise lassen sich mit Hilfe eines sehr einfachen Blechrohrs, nämlich dem Außenrohr 3, und mit zwei einfachen Tiefziehteilen 8, 11 einigermaßen komplizierte Formen von Wasserführungen in dem Ventil herstellen.

Während bei der Ausführungsform der Fig. 1 Wasserführungen zwischen dem Außenrohr und dem Einsatzteil 8 bzw. 11 hergestellt sind, gibt es auch eine Wasserführung, nämlich die Wasserführung für das den Thermostaten verlassende Wasser im mittleren Bereich, die sowohl von beiden Einsatzteilen als auch von dem Außenrohr begrenzt ist.

Fig. 4 zeigt eine Möglichkeit, wie zwei rinnenartige Einsatzteile 17 mit ihren Rändern aneinander anliegend verschweißt werden, zur Bildung eines Rohres.

Fig. 5 zeigt eine weitere Möglichkeit, bei der an einem ebenen Einsatzteil 18 mehrere rinnenartige Einsatzteile 19 angeschweißt sind. Dabei sind auch mehrlagige Anordnungen möglich. Auch hier handelt es sich um einfache, kostengünstig herzustellende leicht miteinander zu verbindende Einzelteile.

## Patentansprüche

1. Verfahren zum Herstellen eines mindestens eine Wasserführung (9, 12) aufweisenden Armaturenkörpers einer Sanitärarmatur, mit folgenden Verfahrensschritten:
1.1 ein den Außenmantel (3) des Armaturenkörpers bildender Hohlkörper wird hergestellt,
1.2 mindestens ein Einsatzteil (8, 11) wird so geformt, dass es in zusammengesetztem Zustand mit einem Teil der Innenseite des Außenmantels (3) eine Wasserführung (9,12) bildet,
1.3 das Einsatzteil (8, 11) wird in den Außenmantel (3) eingebracht,
1.4 dort vorübergehend fixiert und
1.5 an der Innenseite des Außenmantels (3) durch diesen hindurch zerstörungsfrei befestigt.

2. Verfahren nach Anspruch 1, bei dem mindestens eine Wasserführung (9, 12) zwischen zwei Einsatzteilen (8,11) gebildet wird.

3. Verfahren nach Anspruch 1 oder 2, bei dem mindestens eine Wasserführung (9, 12) durch ein im Querschnitt geschlossenes Einsatzteil gebildet wird.

4. Verfahren nach einem der vorhergehenden Ansprüche, bei dem ein Einsatzteil (8, 11) rinnenartig geformt wird.

5. Verfahren nach einem der vorhergehenden Ansprüche, bei dem ein Einsatzteil mit einer Sicke versehen wird.

6. Verfahren nach einem der vorhergehenden Ansprüche, bei dem ein Einsatzteil durch Tiefziehen hergestellt wird.

7. Verfahren nach einem der vorhergehenden Ansprüche, bei dem eine Verbindung zwischen zwei Wasserführungen durch Anbringen eines Lochs hergestellt wird.

8. Verfahren nach einem der vorhergehenden Ansprüche, bei dem der Außenmantel (3) und das Einsatzteil (8, 11) und/oder die Einsatzteile miteinander verschweißt werden.

9. Verfahren nach einem der vorhergehenden Ansprüche, bei dem eine mehrlagige Verbindung mehrerer Einsatzteile miteinander erfolgt.

10. Verfahren nach einem der vorhergehenden Ansprüche, bei dem der Außenmantel (3) und die Einsatzteile (8, 11) miteinander laserverschweißt werden.

11. Verfahren nach einem der Ansprüche 1 bis 9, bei dem der Außenmantel (3) und die Einsatzteile (8, 11) elektronenstrahlverschweißt werden.

12. Mindestens eine Wasserführung (9, 12) aufweisender Armaturenkörper einer Sanitärarmatur, mit
12.1 einem Außenmantel (3),
12.2 mindestens einem Einsatzteil (8, 11), das
12.3 in dem Inneren des Außenmantels (3) angeordnet ist,
12.4 mit dessen Innenseite zerstörungsfrei von der Außenseite her verbunden ist und
12.5 mit der Innenseite des Außenmantels (3) eine Wasserführung (9, 12) bildet.

13. Armaturenkörper nach Anspruch 12, bei dem eine Wasserführung (9,12) mindestens teilweise durch ein im Querschnitt geschlossenes Einsatzteil gebildet ist.

14. Armaturenkörper nach Anspruch 12 oder 13, bei dem eine Wasserführung (9,12) mindestens teilweise zwischen zwei Einsatzteile (8,11) gebildet ist.

15. Armaturenkörper nach einem der Ansprüche 12 bis 14, bei dem die Verbindung zwischen dem Einsatzteil (8, 11) und dem Außenmantel (3) sowie gegebenenfalls zwischen den Einsatzteilen (17, 19) eine Verschweißung ist, insbesondere eine Laserschweißung und/oder eine Elektronenstrahlschweißung, wobei die Verschweißung von der Außenseite des Außenmantels (3) durch diesen hindurch erfolgt.

16. Armaturenkörper nach einem der Ansprüche 12 bis 15, bei dem ein Einsatzteil (8, 11) durch seine Formgebung vor dem Befestigen fixierbar ist.

17. Armaturenkörper nach einem der Ansprüche 12 bis 16, bei dem ein Einsatzteil (8, 11, 19) tiefgezogen ist.

18. Armaturenkörper nach einem der Ansprüche 12 bis 17, bei dem ein Einsatzteil (17, 19) eine Sicke aufweist, die einen Teil der Wasserführung bildet.

19. Armaturenkörper nach einem der Ansprüche 12 bis 18, bei dem eine Bohrung mehrere Wasserführungen miteinander verbindet.

20. Armaturenkörper nach einem der Ansprüche 12 bis 19, bei dem Einsatzteile (18, 19) mehrlagig verbunden sind.

21. Armaturenkörper nach einem der Ansprüche 12 bis 20, mit einem nur der Verstärkung dienenden Einsatzteil.

22. Armaturenkörper nach einem der Ansprüche 12 bis 21, mit mehreren identischen Einsatzteilen (8, 11).

23. Armaturenkörper nach einem der Ansprüche 12 bis 22, bei dem ein Einsatzteil (8, 11) im Bereich der Verbindung mit dem Außenmantel (3) und oder einem zweiten Einsatzteil (11, 8) flächig anliegt.

## Claims

1. Process for creating a fixture element of a plumbing fixture having at least one water conduit (9, 12) including the following process steps:
1.1. A hollow article forming the outer sheath (3) of the fixture element is created,
1.2 at least one insert part (8, 11) is formed in such a way that it forms a water conduit (9, 12) when joined together with part of the interior of the outer sheath (3),
1.3 the insert part (8, 11) is inserted in the outer sheath (3),
1.4. temporarily secured there and
1.5 attached non-invasively to the interior of the outer sheath (3) from the exterior thereof.

2. Process according to claim 1, whereby at least one water conduit (9, 12) is formed between two insert parts (8, 11).

3. Process according to claim 1 or 2, whereby at least one water conduit (9, 12) is formed by an insert part with an uninterrupted cross-section.

4. Process according to one of the preceding claims, whereby an insert part (8, 11) is formed in a channel-like manner.

5. Process according to one of the preceding claims, whereby an insert part is provided with a reinforced seam.

6. Process according to one of the preceding claims, whereby an insert part is created by deep-drawing.

7. Process according to one of the preceding claims, whereby two water conduits are connected with each other by providing a hole.

8. Process according to one of the preceding claims, whereby the outer sheath (3) and the insert part (8, 11) and/or insert parts are welded together.

9. Process according to one of the preceding claims, whereby several insert parts are connected in a multilayered manner.

10. Process according to one of the preceding claims, whereby the outer sheath (3) and the insert parts (8, 11) are welded together by laser.

11. Process according to one of claims 1 to 9, whereby the outer sheath (3) and the insert parts (8, 11) are welded together by electron beams.

12. A fixture element of a plumbing fixture having at least one water conduit (9, 12), with
12.1 an outer sheath (3),
12.2 at least one insert part (8, 11), which
12.3 is positioned in the interior of the outer sheath (3),
12.4 is non-invasively connected with the interior thereof from the exterior and 12.5 forms a water conduit (9, 12) with the interior of the outer sheath (3).

13. Fixture element according to claim 12, whereby a water conduit (9, 12) is at least partially formed by an insert part with an uninterrupted cross-section.

14. Fixture element according to claim 12 or 13, whereby a water conduit (9, 12) is at least partially formed between two insert parts (8, 11).

15. Fixture element according to one of claims 12 to 14, whereby the connection between the insert part (8, 11) and the outer sheath (3) as well as, if applicable, between the insert parts (17, 19) is a weld, and, in particular a laser weld and/or an electron beam weld, wherein the weld is made from the exterior of the outer sheath (3) to the interior thereof.

16. Fixture element according to one of claims 12 to 15, whereby the design of an insert part (8, 11) enables it to be secured before attaching.

17. Fixture element according to one of claims 12 to 16, whereby an insert part (8, 11, 19) is deep-drawn.

18. Fixture element according to one of claims 12 to 17, whereby an insert part (17, 19) has a reinforcing seam, which forms part of the water conduit.

19. Fixture element according to one of claims 12 to 18, whereby a bored hole connects several water conduits with each other.

20. Fixture element according to one of claims 12 to 19, whereby insert parts (18, 19) are connected in a multilayered manner.

21. Fixture element according to one of claims 12 to 20, with an insert part acting only as a reinforcement element.

22. Fixture element according to one of claims 12 to 21 with several identical insert parts (8, 11).

23. Fixture element according to one of claims 12 to 22, whereby an insert part (8, 11) lies flush in the region of the connection with the outer sheath (3) and/or a second insert part (11, 8).

## Revendications

1. Procédé pour la fabrication d'un corps de robinetterie présentant au moins une conduite d'eau (9, 12) d'une robinetterie sanitaire, avec les étapes de procédé suivantes :
1.1 un corps creux formant l'enveloppe extérieure (3) du corps de robinetterie est fabriqué,
1.2 au moins une pièce rapportée (8, 11) est formée de telle sorte qu'elle forme dans l'état assemblé avec une partie de la face intérieure de l'enveloppe extérieure (3) une conduite d'eau (9, 12),
1.3 la pièce rapportée (8, 11 ) est montée dans l'enveloppe extérieure (3),
1.4 y est fixée temporairement et
1.5 est fixée à la face intérieure de l'enveloppe extérieure (3) à travers celle-ci de manière non destructive.

2. Procédé selon la revendication 1, dans lequel au moins une conduite d'eau (9, 12) est formée entre deux pièces rapportées (8, 11).

3. Procédé selon la revendication 1 ou 2, dans lequel au moins une conduite d'eau (9, 12) est formée par une pièce rapportée fermée transversalement.

4. Procédé selon l'une des revendications précédentes, dans lequel une pièce rapportée (8, 11) est formée sous forme de gouttière.

5. Procédé selon l'une des revendications précédentes, dans lequel une pièce rapportée est munie d'une moulure.

6. Procédé selon l'une des revendications précédentes, dans lequel une pièce rapportées est fabriquée par emboutissage.

7. Procédé selon l'une des revendications précédentes, dans lequel une liaison est établie entre deux conduites d'eau par réalisation d'un trou.

8. Procédé selon l'une des revendications précédentes, dans lequel l'enveloppe extérieure (3) et la pièce rapportée (8, 11) et/ou les pièces rapportées sont soudées les unes aux autres.

9. Procédé selon l'une des revendications précédentes, dans lequel a lieu une liaison multicouche de plusieurs pièces rapportées entre elles.

10. Procédé selon l'une des revendications précédentes, dans lequel l'enveloppe extérieure (3) et les pièces rapportées (8, 11) sont soudées les unes aux autres au laser.

11. Procédé selon l'une des revendications 1 à 9, dans lequel l'enveloppe extérieure (3) et les pièces rapportées (8, 11) sont soudées par bombardement électronique.

12. Corps de robinetterie présentant au moins une conduite d'eau (9, 12) d'une robinetterie sanitaire, avec
12.1 une enveloppe extérieure (3),
12.2 au moins une pièce rapportée (8, 11), qui
12.3 est disposée à l'intérieur de l'enveloppe extérieure (3),
12.4 avec la face intérieure de laquelle elle est reliée de manière non destructive à partir de la face extérieure et
12.5 forme avec la face intérieure de l'enveloppe extérieure (3) une conduite d'eau (9, 12).

13. Corps de robinetterie selon la revendication 12, dans lequel est formée une conduite d'eau (9, 12) au moins partiellement par une pièce rapportée fermée transversalement.

14. Corps de robinetterie selon la revendication 12 ou 13, dans lequel est formée une conduite d'eau (9, 12) au moins partiellement entre deux pièces rapportées (8, 11).

15. Corps de robinetterie selon l'une des revendications 12 à 14, dans lequel la liaison entre la pièce rapportée (8, 11) et l'enveloppe extérieure (3) ainsi que le cas échéant entre les pièces rapportées (17, 19) est une soudure, en particulier une soudure au laser et/ou une soudure par bombardement électronique, où la soudure se fait à partir de la face extérieure de l'enveloppe extérieure (3) à travers celle-ci.

16. Corps de robinetterie selon l'une des revendications 12 à 15, dans lequel une pièce rapportée (8, 11) peut être fixée de par sa conception avant la fixation.

17. Corps de robinetterie selon l'une des revendications 12 à 16, dans lequel une pièce rapportée (8, 11, 19) est emboutie.

18. Corps de robinetterie selon l'une des revendications 12 à 17, dans lequel une pièce rapportée (17, 19) présente une moulure qui forme une partie de la conduite d'eau.

19. Corps de robinetterie selon l'une des revendications 12 à 18, dans lequel un trou relie plusieurs conduites d'eau entre elles.

20. Corps de robinetterie selon l'une des revendications 12 à 19, dans lequel les pièces rapportées (18, 19) sont reliées en plusieurs couches.

21. Corps de robinetterie selon l'une des revendications 12 à 20, avec une pièce rapportée servant uniquement de renfort.

22. Corps de robinetterie selon l'une des revendications 12 à 21, avec plusieurs pièces rapportées identiques (8, 11).

23. Corps de robinetterie selon l'une des revendications 12 à 22, dans lequel une pièce rapportée (8, 11) repose à plat dans la zone de liaison avec l'enveloppe extérieure (3) et/ou une deuxième pièce rapportée (11, 8).
